Europäisches Patentamt

European Patent Office

Office européen des brevets

(11) Publication number: **0 233 856 B1**

# EUROPEAN PATENT SPECIFICATION

(45) Date of publication of patent specification: **05.01.94**

(51) Int. Cl.⁵: **A23D 9/00**, A23L 1/308, A23L 1/30, A61K 31/70, A61K 31/23

(21) Application number: **87870022.8**

(22) Date of filing: **19.02.87**

The file contains technical information submitted after the application was filed and not included in this specification

(54) **Better tasting low calorie fat materials.**

(30) Priority: **20.02.86 US 831397**

(43) Date of publication of application:
**26.08.87 Bulletin 87/35**

(45) Publication of the grant of the patent:
**05.01.94 Bulletin 94/01**

(84) Designated Contracting States:
**BE CH DE FR GB GR IT LI LU NL SE**

(56) References cited:
| | |
|---|---|
| FR-A- 2 254 318 | FR-A- 2 329 291 |
| US-A- 3 600 186 | US-A- 3 963 699 |
| US-A- 4 005 195 | US-A- 4 005 196 |
| US-A- 4 241 054 | US-A- 4 508 746 |

(73) Proprietor: **THE PROCTER & GAMBLE COMPANY**
**One Procter & Gamble Plaza**
**Cincinnati Ohio 45202(US)**

(72) Inventor: **Bernhardt, Christian Albert**
**3559 Mack Road**
**Fairfield, OH 45014(US)**

(74) Representative: **Ernst, Hubert et al**
**PROCTER & GAMBLE**
**EUROPEAN TECHNICAL CENTER**
**Temselaan 100**
**B-1853 Strombeek-Bever (BE)**

## Description

Field of the Invention

The present invention relates to edible compositions containing certain low calorie fat materials and additional ingredients to make the materials better tasting in the mouth.

Background of the Invention

One of the most common metabolic problems among people today is obesity. This condition is primarily due to ingestion of a greater number of calories than are expended. Fat is the most concentrated form of energy in the diet, with each gram of fat supplying approximately 9 calories. Overall, fat constitutes about 40% of the total calories in the diet.

Triglycerides constitute about 90% of the total fat consumed in the average diet. One method by which the caloric value of edible fat could be lowered would be to decrease the amount of triglyceride that is absorbed in the human system since the usual edible triglyceride fats are almost completely absorbed (see Lipids, 2, H. J. Deuel, Interscience Publishers, Inc., New York 1955, page 215). A low calorie fat offers a convenient and practical method by which obesity can be prevented or overcome.

Low calorie fats which can replace triglycerides are described by Mattson et al. U.S. Patent 3,600,186 to Mattson et al. discloses low calorie, fat-containing, food compositions in which at least a portion of the triglyceride content is replaced with a polyol fatty acid ester, said polyol fatty acid ester having at least four fatty acid ester groups with each fatty acid having from 8 to 22 carbon atoms.

U.S. Patent 4,005,196 to Jandacek et al. discloses the low calorie fat-containing food compositions of the Mattson et al. patent, in combination with sufficient fat-soluble vitamin selected from the group consisting of vitamin A, vitamin D, vitamin E and vitamin K.

The esters disclosed in the Mattson et al. and Jandacek et al. patents are effective fat substitutes for use in low calorie food products.

The use of esters of this type in edible products is also disclosed in several Journal Articles, viz Mattson et al J. Nutrition 109 (1979) # 10 pp 1688-1693, Mattson et al J. Nutrition 106 (1976) # 6 pp 747-752 and Fallat et al Am. J. Clin Nutrition 29 (1976) pp 1204-1215. The J. Nutrition (109) Article relates to the effect of sucrose polyester on the absorption of dietary cholesterol, the J. Nutrition 106 Article reports a study of the effect of sucrose polyester on Vitamin A metabolism, while the Am. J. Clin Nutrition Article relates to the lowering of blood plasma cholesterol by a dietary agent containing sucrose polyester.

Unfortunately, regular ingestion of moderate to high levels of these esters can produce an undesirable "laxative" effect, namely, leakage of the ester through the anal sphincter. One way to prevent this undesirable laxative effect is to formulate the esters so that they are completely solid at body temperature.

Another means of preventing the undesirable laxative effect is through the addition to the ester of anti-anal leakage agents such as those described in U.S. Patent 4,005,195 to Jandacek. This patent discloses anti-anal leakage agents which include solid fatty acids (melting point 37°C or higher) and their triglyceride source, and solid polyol fatty acid polyesters. Specifically, the agents are selected from the group consisting of: edible $C_{12}$ and higher saturated fatty acids, and their edible salts; edible, digestible sources of $C_{12}$ and higher saturated fatty adds; edible, nonabsorbable, nondigestible solid polyol fatty acid polyesters having at least 4 fatty acid ester groups, wherein the polyol is selected from the group consisting of sugars and sugar alcohols containing from 4 to 8 hydroxyl groups and wherein each fatty acid group has from about 8 to about 22 carbon atoms; and edible, nondigestible eaters of alpha-branched chain $C_{10}$-$C_{18}$ fatty acids.

The completely solid eaters referred to above, and solid triglycerides or esters used as anti-anal leakage agents, have drawbacks when used in low calorie food compositions. An ester or triglyceride having a high solids content tastes "waxy" in the mouth when ingested. It would be desirable to have a substitute for triglyceride fats that is still effective at reducing calories, but that does not taste waxy in the mouth. At the same time, it is critical that this fat substitute not produce a undesired laxative effect.

It is therefore an object of the present invention to provide a composition, useful as a fat substitute in foods, which does not taste wary in the mouth when ingested.

It is another object of this invention to provide a composition made with low calorie fat materials, so that food products made with the composition are low in calories.

It is a further object of the present invention to avoid a laxative side effect without having to add anti-anal leakage agents.

EP 0 233 856 B1

## Summary of the Invention

According to one aspect of the present invention there is provided a composition of matter having a Solid Fat Content less than 20% at mouth temperature (33.3°C), comprising :

(a) an edible, wholly or partially nondigestible low calorie fat material selected from sugar fatty acid polyesters, sugar alcohol fatty acid polyesters and mixtures thereof wherein the sugars and sugar alcohols contain from 4 to 8 hydroxyl groups, wherein the sugar fatty acid polyesters and sugar alcohol fatty acid polyesters have at least 4 fatty acid ester groups, and wherein the fatty acids are mixtures of fatty acids containing from 8 to 22 carbon stoms, wherein the sugar fatty acid polyesters that are sucrose fatty acid polyesters have an octa ester content of at least 70%, said low calorie fat material having, at 37.8°C :

(i) a viscosity of at least 0.25 Ps.s. at a shear rate of 800 seconds$^{-1}$, a viscosity of least 0.4 Ps.s. at a shear rate of 100 seconds$^{-1}$, and a viscosity of at least 2.5 Pa.s. at a shear rate of 10 seconds$^{-1}$;

(ii) a yield point of at least 250 Pa

(iii) a thizotropic area of at least $0.2 \times 10^5$ Pa.sec$^{-1}$ and

(iv) a liquid/solid stability of at least 50%, defined as the weight percent of a sample not separating as a liquid after centrifuging at 60,000 RPM for 1 hour at 37.8°C; and

(b) an edible, absorbable, digestible food material which acts as a solvent for said fat material.

According to another aspect of the invention there is provided a composition of matter comprising the above defined fat material in combination with a food emulsifier capable of forming an oil-in-water emulsion with the fat material in the mouth, said food emulsifier having an HLB value of at least 2.

The compositions of this invention are useful as fat substitutes in low calorie fat-containing food products. The compositions provide a non-waxy taste in the mouth. At the same time, a laxative side effect is avoided without the use of anti-anal leakage agents.

## Detailed Description of the Invention

This invention relates to non-waxy-tasting compositions useful as fat substitutes for making low calorie food products. The compositions do not produce an undesirable laxative side effect. Generally speaking, the invention involves the use of certain edible, wholly or partially nondigestible low calorie fat materials that are able to retain their viscosity and stability at relatively low solids content levels. Then, these fat materials are made even more palatable by adding either a food material that lowers the melting point of the composition or a food emulsifier capable of producing an oil-in-water emulsion with the fat materials.

It was discovered that some intermediate melting low calorie fat materials with pseudoplastic flow properties exhibit unique and unexpected rheology and liquid/solid stability at body temperature. These compositions behave as stable, homogeneous non-Newtonian pseudoplastic materials at body temperature. For example, specially synthesized sucrose fatty acid polyesters that were 12% solid and 88% liquid at body temperature (98.6°F, 37°C) were very viscous and had excellent liquid/solid stability. This is in contrast to the properties of a mixture containing 88% liquid sucrose polyester and 12% solid sucrose polyester. At body temperature the mixture will separate into liquid and solid portions. Additionally, this mixture has a low viscosity. The specially synthesized sucrose polyesters, on the other hand, exhibit pseudoplastic flow and surprising viscosity and liquid/solid stability at relatively low levels of solids. The low calorie fat materials of this invention are thought to be homogeneous systems. While not intended to be bound by theory, evidence of networking between the solid crystals of the materials has been discovered which may be involved in their surprisingly high liquid/solid stability and viscosity at body temperature.

A benefit of the fat materials' high viscosity and liquid/solid stability is that ingestion of them does not result in an undesirable laxative side effect. Being viscous and stable, the materials pass from the digestive tract through the anal sphincter in much the same manner as normal feces. Hence, the fat materials of this invention can be safely ingested without adding anti-anal leakage agents.

Another benefit accrues from the fact that the present fat materials are able to retain their high viscosity and stability at relatively low solids content levels. It has been found that they are capable of being ingested without a laxative side effect even at Solids Fat Content levels down to about 5%. When the fat substitute compositions are made with low solids content levels, less solids are perceived in the mouth when the compositions are eaten, so foods containing them taste less waxy.

The present invention relates to compositions containing these fat materials, in which additional ingredients are added to make compositions in which the taste of the fat materials is further improved.

3

A. Description of the Low Calorie Fat Materials

By "low calorie fat materials" is meant edible materials which can replace triglyceride fats or oils in the human diet. These materials provide the benefits of triglyceride fats and oils, i.e., lubricity and flavors.

By "wholly nondigestible" is meant that substantially all of the material is not digested by the body. It passes through the digestive system substantially the same as when it was ingested. The term "partially nondigestible" means that at least 30% of the material is not digested. Preferably at least 70% of the material is not digested.

By "liquid/solid stability" as used herein is meant that the liquid portion of the material does not readily separate from the solid portion at body temperature, i.e., the material appears to be a solid even though up to about 95% of it is liquid. Liquid/solid stability is measured by centrifuging a sample of the material at 60,000 rpm for one hour at 100°F (37.8°C). Liquid/solid stability is defined as: 100% minus percentage of the material that separated as a liquid after centrifuging.

The present invention is concerned with the rheology of the low calorie fat materials at body temperature (98.6°F 37°C) because they must be stable and viscous at body temperature to eliminate a laxative side effect. However, the measurements herein were done at 100°F (37.8°C) as a matter of convenience and for easier calibration of instruments, and the invention is defined in terms of properties at 100°F (37.8°C). It is understood that measurements done at 100°F (37.8°C) are very close to measurements at body temperature, and they conservatively state the rheological properties at body temperature since a lower temperature increases the viscosity.

The fat materials herein exhibit unexpected rheology and liquid/solid stability at body temperature. For example specially synthesized intermediate melting sucrose fatty acid polyesters which are 12% solid and 88% liquid at body temperature exhibit non-Newtonian pseudoplastic flow properties, are very viscous and have excellent liquid/solid stability. This is in contrast to the properties of a mixture containing 88% of a liquid sucrose polyester and 12% of a solid sucrose polyester. At body temperature the mixture of 12% solid sucrose polyester and 88% liquid sucrose polyester separates into liquid and solid portions. Additionally, the mixture has a low viscosity. The specially synthesized sucrose polyesters, on the other hand exhibit pseudoplastic flow and surprising viscosity and liquid/solid stability at relatively low levels of solids.

A benefit of the low calorie fat materials' high viscosity and liquid/solid stability is that ingestion of the materials does not result in an undesirable laxative side effect. Being viscous and stable, the materials pass from the digestive tract through the anal sphincter in much the some manner as normal feces. Hence, the materials of this invention can be safely ingested without adding anti-anal leakage agents.

Another benefit accrues from the fact that the present fat materials are able to retain their high viscosity and stability at relatively low solids content levels. When the compositions are ingested, less solids are perceived in the mouth, so the compositions taste less waxy.

The low calorie fat materials of this invention are thought to be homogenous systems. While not intended to be bound by theory, evidence of networking between the solid crystals and liquid of the materials has been discovered which may be involved in the surprisingly high liquid/solid stability and viscosity of the materials at body temperature.

The present invention, then, relates to a composition of matter comprising an edible, wholly or partially nondigestible low calorie fat material having physical chemical properties such that it has a non-Newtonian pseudoplastic rheology at 100°F (37.8°C). In particular, at 100°F (37.8°C) the fat material has: (a) a viscosity of at least 0.25 Pa.s. (2.5 poise) at a shear rate of 800 seconds$^{-1}$, a viscosity of at least 0.4 Pa.s (4.0 poise) at a shear rate of 100 seconds$^{-1}$, and a viscosity of at least 2.5 Pa.s. (25.0 poise) at a shear rate of 10 seconds$^{-1}$; (b) a yield point of at least 250 Pa (2,500 dynes/cm$^2$); (c) a thixotropic area of at least 0.20 x 10$^5$ Pa.sec$^{-1}$ (0.20 x 10$^6$ dynes/cm$^2$-sec); and (d) a liquid/solid stability of at least 50%.

Viscosity, yield point, and thixotropic area are well known rheological properties, and can be measured by use of an instrument such as a plate and cone viscometer (e.g., a Ferranti-Shirley viscometer, manufactured by Ferranti Electric, Inc., 87 Modular Ave., Commack, NY 11725). The basics of rheology are dIscussed in Idson, "Rheology: Fundamental Concepts," Cosmetics and Toiletries, Vol. 93, pp. 23-30 (July 1978). "Viscosity" is a measure of the internal friction resisting the movement of each layer of fluid as it moves past an adjacent layer of fluid. The "yield value" is the amount of shearing stress that must be applied before a material will begin to flow. Idson defines "thixotropy" as a reversible gel-sol-gel transition caused by the building up of a definite structure within the material. The gelled structure upon shaking or stirring becomes a sol, which when allowed to remain undisturbed, becomes gelled again.

To measure viscosity, yield point, and thixotropic area of a sample of the fat material of this invention, a plate and cone viscometer is used to record a rheogram, which is a plot of shear stress versus shear rate.

Viscosity and yield point are calculated from points on the rheogram curve, and the thixotropic area is the area within the curve (also known as the "hysteresis loop"). Additional details are provided below under the Analytical Methods section.

Preferably, at 100°F (37.8°C) the low calorie fat materials of this invention have a viscosity of at least 5 Pa.s (5 poise) at a shear rate of 800 seconds$^{-1}$, a viscosity of at least 2.0 Pa.s (20 poise) at a shear rate of 100 seconds$^{-1}$, and a viscosity of at least 20 Pa.s. (200 poise) at a shear rate of 10 seconds$^{-1}$. The preferred yield point of the compositions is at least 500 Pa (5,000 dynes/cm$^2$), and the preferred thixotropic area is at least 0.75 x 10$^5$ Pa sec$^{-1}$ (0.75 x 10$^6$ dynes/cm$^2$-sec). Preferably, the compositions have a liquid/solid stability of at least 90%.

Most preferably, at 100°F (37.8°C) the low calorie fat materials have a viscosity of at least 0.8 Pas. (8 poise) at a shear rate of 800 seconds$^{-1}$, a viscosity of at least 3.0 Pa.s. (30 poise) at a shear rate of 100 seconds$^{-1}$, and a viscosity of at least 40 Pa.s. (400 poise) at a shear rate of 10 seconds$^{-1}$. The most preferred yield point of the compositions is at least 1500 Pa (15,000 dynes/cm$^2$), and the most preferred thixotropic area is at least 1.00 x 10$^5$ Pa sec$^{-1}$ (1.00 x 10$^6$ dynes/cm$^2$-sec).

The preferred upper limit of the viscosity of the fat materials of this invention is 1 x 10$^4$ Pa.s (1 x 10$^5$ poise) at a shear rate of 10 seconds$^{-1}$, and 100 Pa s. (1,000 poise) at a shear rate of 100 seconds$^{-1}$. The fat materials must have pseudoplastic flow properties as defined herein.

Iodine Value is a measure of the degree of unsaturation of fatty acids. The low calorie fat materials of this invention preferably have an Iodine Value of from 36 to 55.

The Solid Fat Content value (SFC) provides a reasonable approximation of the percent by weight solids of a particular fatty material at a given temperature. The present low calorie fat material preferably has a Solid Fat Content at 100°F (37.8°C) of at least 5%. Most preferably, the Solid Fat Content at 100°F (37.8°C) is at last 10%. The low calorie fat material preferably has a complete melting point higher thank 98.6°F (37°C).

The low calorie fat materials of the present invention comprise sugar fatty acid polyesters, sugar alcohol fatty acid polyesters, and mixtures thereof, wherein the sugars and sugar alcohols contain from 4 to 8 hydroxyl groups, wherein the sugar fatty acid polyesters and sugar alcohol fatty acid polyesters have at least 4 fatty acid ester groups and wherein the fatty acids are mixtures of fatty acids containing from 8 to 22 carbon atoms, wherein the sugar fatty acid polyesters that are sucrose fatty acid polyesters have a octa ester content of at least 70%

Sugar or sugar alcohol fatty acid polyesters comprise sugars or sugar alcohols, and fatty adds. The term "sugar" is used herein in its conventional sense as generic to mono- and disaccharides. The term "sugar alcohol" is also used in its conventional sense as generic to the reduction product of sugars wherein the aldehyde or ketone group has been reduced to an alcohol. The fatty acid ester compounds are prepared by reacting a monosaccharide, disaccharide or sugar alcohol with fatty adds as discussed below.

Examples of suitable monosaccharides are those containing 4 hydroxyl groups such as xylose, arabinose, and ribose; the sugar alcohol derived from xylose, i.e., xylitol, is also suitable. The monosaccharide erythrose is not suitable for the practice of this invention since it only contains 3 hydroxyl groups; however, the sugar alcohol derived from erythrose, i.e. erythritol, contains 4 hydroxyl groups and is thus suitable. Among 5 hydroxyl-containing monosaccharides that are suitable for use herein are glucose, mannose, galactose, fructose, and sorbose. A sugar alcohol derived from fructose, glucose, or sorbose, e.g., sorbitol, contains 6 hydroxyl groups and is also suitable as the alcohol moiety of the fatty add ester compound. Examples of suitable disaccharides are maltose, lactose, and sucrose, all of which contain 8 hydroxyl groups.

In preparing sugar or sugar alcohol fatty acid polyesters of the present invention a sugar or sugar alcohol compound such as those identified above must be esterified with a mixture of fatty acids having from 8 to 22 carbon atoms. Examples of such fatty acids are caprylic, capric, lauric, myristic, myristoleic, palmitic, palmitoleic, stearic, oleic, ricinoleic, linoleic, linolenic, eleostearic, arachidic, behenic, and erucic. The fatty acids can be derived from suitable naturally occurring or synthetic fatty acids and can be saturated or unsaturated, including positional and geometric isomers. The fat materials of this invention are mixed esters of fatty adds, rather than esters of a single type of fatty acid.

Fatty acids per se or naturally occurring fats and oils can serve as the source for the fatty add component in the sugar or sugar alcohol fatty acid ester. For example, rapeseed oil provides a good source for $C_{22}$ fatty acid. $C_{16}$-$C_{18}$ fatty acid can be provided by tallow, soybean oil, or cottonseed oil. Shorter chain fatty acids can be provided by coconut, palm kernel, or babassu oils. Corn oil, lard, olive oil, palm oil, peanut oil, safflower seed oil, sesame seed oil, and sunflower seed oil, are examples of other natural oils which can serve as the source of the fatty acid component.

The sugar or sugar alcohol fatty acid polyesters suitable for use herein can be prepared by a variety of methods well known to those skilled in the art. These method include: transesterification of the sugar or sugar alcohol with methyl, ethyl or glycerol fatty acid esters using a variety of catalysts; acylation of the sugar or sugar alcohol with a fatty acid chloride; acylation of the sugar or sugar alcohol with a fatty acid anhydride; and acylation of the sugar or sugar alcohol with a fatty acid, per se. As an example, the preparation of sugar and sugar alcohol fatty acid esters is described in U.S. Pat. No. 2,831,854.

A characterizing feature of the sugar or sugar alcohol fatty acid polyesters useful in this invention is that they predominantly contain at least 4 fatty acid polyester groups. Sugar or sugar alcohol fatty acid polyester compounds that contain 3 or less fatty acid ester groups are digested in the intestinal tract much in the manner as ordinary triglyceride fats, but sugar or sugar alcohol fatty acid polyester compounds that contain four or more fatty acid ester groups are digested to a lesser extent and thus have the desired low calorie properties for use in this invention.

Highly preferred low calorie fat materials according to this invention are sucrose fatty acid polyesters. Preferred sucrose fatty acid polyesters have the majority of their hydroxyl groups esterified with fatty acids. Preferably at least 80%, and most preferably at least 95%, of the sucrose fatty acid polyesters are octaesters, heptaesters or hexaesters, and mixtures thereof. Preferably, no more than 35% of the esters are hexaesters or heptaesters, but at least 60% of the sucrose fatty acid polyesters are octaesters. More preferably, at least 70% of the polyesters are octaesters.

In order to provide the required physical properties, the sucrose fatty acid polyesters of this invention are preferably esterified with particular kinds of fatty acids. Preferably, at least 80%, and most preferably at least 90%, of the fatty acids are mixtures of palmitic, stearic, oleic, linoleic, and behenic acids.

More specifically, the following is a preferred fatty acid composition: from 9% to 12% palmitic; from 35% to 53% stearic; from 19% to 43% oleic; from 2% to 17% linoleic; from 0% to 2% linolenic; from 0% to 2% arachidic; from 0% to 10% behenic; and from 0% to 2% erucic. The following fatty acid composition is most preferred: from 9% to 12% palmitic; from 42% to 53% stearic; from 19% to 39% oleic; from 2% to 17% linoleic; from 0% to 2% linolenic; from 0% to 2% arachidic; from 0% to 10% behenic; and from 0% to 2% erucic.

B. Methods for Making the Fat Materials Better Tasting

While the fat materials of this invention offer an improvement in non-waxy taste when used alone in a food product, this invention relates to methods for making the fat materials even better-tasting than they are alone.

One method involves the use of an edible, absorbable, digestible food material which acts as a solvent for the fat material It was discovered that by the addition of a food material such as a liquid triglyceride to the fat materials, the melting point of the materials is lowered, so that at mouth temperature (92°F, 33.3°C) the fat materials have a Solid Fat Content less than 20%. Hence, when the fat materials are ingested they do not taste waxy in the mouth. After being ingested, the food material that acts as a solvent is digested in the stomach and intestines, and the melting point reduction effect is thereby eliminated. The fat materials revert to their original solids content in the gastrointestinal tract. When the fat materials pass from the colon, then, they are viscous and stable enough to not cause a laxative side effect.

Therefore, one aspect of the present invention is a composition of matter having a Solid Fat Content less than 20% at mouth temperature (33,3°C, 92°F), comprising :

(a)an edible, wholly or partially nondigestible low calorie fat material selected from sugar fatty acid polyesters, sugar alcohol fatty acid polyesters and mixtures thereof wherein the sugars and sugar alcohols contain from 4 to 8 hydroxyl groups, wherein the sugar fatty acid polyesters and sugar alcohol fatty acid polyesters have at least 4 fatty acid ester groups, and wherein the fatty acids are mixtures of fatty acids containing from 8 to 22 carbon stoms, wherein the sugar fatty acid polyesters that are sucrose fatty acid polyesters have an octa ester content of at least 70%, said low calorie fat material having, at 37.8°C (100°F):

(i) a viscosity of at least 0.25 Pa.s. (2,5 poise) at a shear rate of 800 seconds$^{-1}$, a viscosity of least 0.4 Pa.s. (2,5 poise) at a shear rate of 100 seconds$^{-1}$, and a viscosity of at least 2.5 Pa.s. (25 poise) at a shear rate of 10 seconds$^{-1}$;

(ii) a yield point of at least 250 Pa (2500 dynes/cm$^2$)

(iii)a thizotropic area of at least 0.2x10$^5$ Pa.sec$^{-1}$ (0,2.10$^6$ dynes/cm$^2$-sec) and

(iv)a liquid/solid stability of at least 50%, defined as the weight percent of a sample not separating as a liquid after centrifuging at 60,000 RPM for 1 hour at 37.8°C (100°F); and

(b)an edible, absorbable, digestible food material which acts as a solvent for said fat material.

6

For very good non-waxy taste in the mouth, it is preferable that the composition have a Solid Fat Content less than 10% at mouth temperature (92°F, 33.3°C), and most preferably less than 5%.

The edible, absorbable, digestible food material which acts as a solvent for the fat material is preferably selected from the group consisting of triglycerides, monoglycerides, diglycerides, substituted mono- and diglycerides, polyglycerol esters, citrus oils, flavorants, edible alcohols, edible food emulsifiers, and mixtures thereof. Most preferably, the food material is selected from the group consisting of triglycerides and substituted mono- and diglycerides, and mixtures thereof. By "substituted" mono- and diglycerides is meant mono- and diglycerides in which the free hydroxyl groups are substituted with edible short chain fatty acids, i.e., $C_2$ through $C_8$.

Edible food emulsifiers include mono- and diglycerides, lower sucrose esters ($C_1$- $C_4$), and lower polyglycerol esters ($C_1$-$C_4$).

The digestible food material must be capable of lowering the melting point (freezing point) of the fat materials. Freezing point depression generally follows the formula: $I/T = I/T_o - (R \ln x/\text{delta } H_f)$, where $T$ = freezing point, $T_o$ = pure freezing point, $X$ = mole fraction, ad delta $H_f$ = heat of fusion.

The amount and type of digestible food material used as a solvent will depend on the end food product in which the composition of this invention will be used. For example, a preferred food material for this purpose is triglycerides. In a margarine product what is desired is a low Solid Fat Content and a fairly low viscosity. There is a optimum viscosity so that the margarine is thin enough so that the saliva in the mouth can act on it ad make it invert. If the margarine is too thin, it will disperse in the mouth before the saliva is able to act on it. As another example, shortening must have substantial plasticity because of its use in the areas of frying and baking. Yet, the shortening should not be so firm as to taste very firm in the mouth. In summary, a specific triglyceride or other food material is picked depending on the food product in which it will be used.

It has been discovered that particular ratios of triglyceride and fat substitute (in particular sucrose polyesters) are desirable in terms of calorie reduction. To maximize the calorie reduction benefit, from 67% to 90% of the sucrose polyester is combined with from 33% to 10% triglyceride. To obtain the minimum reduced calorie benefit that is allowed by current Government regulations, from 33% to 90% sucrose polyester is combined with from 66% to 10% triglyceride.

The other method of this invention, for making the low calorie fat materials even more palatable, comprises adding to the fat materials an edible, digestible food emulsifier capable of forming an oil-in-water emulsion with the fat materials in the mouth. Saliva from the mouth and any water in the food comprises the water portion of the emulsion, while the present fat material and any oil from the food comprises the oil part. When the fat material is made into an oil-in-water emulsion with saliva, it does not taste waxy in the mouth. After ingestion, the food emulsifier is digested while the fat material remains undigested, so the fat material reverts to its original form. A good-tasting food product can be made that does not produce a laxative side effect.

Tendency of an emulsifier to form an oil-in-water emulsion is measured by its hydrophilic/lipophilic balance (HLB). The emulsifier used in the composition of this invention must have an HLB value of at least 2.

Preferred food emulsifiers for use herein are selected from the group consisting of mono- and diglycerides, lower sucrose esters, lower polyglycerol esters, and mixtures thereof.

The compositions of the present invention can be used as a partial or total replacement for normal triglyceride fat in any fat-containing food composition to provide low calorie benefits. In order to obtain a significant low calorie effect, it is necessary that at least 10% of the fat in the food composition comprises the present compositions. On the other hand, very low calorie and thus highly desirable food compositions of the invention are obtained when the fat comprises up to 100% of the compositions of this invention. Hence, the compositions of the present invention can be used as a partial or complete replacement for normal triglyceride fat in a salad or cooking oil, or a plastic shortening, or the like. The compositions can also be used as a partial or complete replacement for normal triglyceride fat in fat-containing food products such as mayonnaise, margarine, and dairy products.

Analytical Methods

I. Rheology Measurements

A. Sample Preparation

The low calorie fat material is melted in a microwave oven at from 150°F (66°C) to 170°F (77°C). This takes approximately 2 minutes. The melted fat material is held at 100°F ± 5°F (37.8°C ± 3°C), and a 3 gram sample is weighed into a Solo$^R$ plastic souffle cup. The sample is then allowed to recrystallize at 100°F ± 5°F (37.8°C ± 3°C) for 24 hours. After the 24 hour time period has elapsed, the sample is taken to the viscometer in an insulated cup and the viscosity is measured.

B. Ferranti-Shirley Viscometer Operation Procedure

A Ferranti-Shirley viscometer is used for the viscosity, yield point, and thixotropic area measurements. A cone is put into place, and the viscometer temperature is adjusted to 100°F (37.8°C). The chart recorder is calibrated, and the gap between the cone and plate is set. The cone speed is checked, and the cone and plate temperatures are equilibrated to 100°F (37.8°C). The panel controls are set. Sufficient sample is placed between the plate and the cone so that the gap is completely filled. The temperature is allowed to stabilize at 100°F (37.8°C) for 30 seconds, and then the cone rotation and recording are started. A rheogram for the fat material is recorded and analyzed to determine the viscosity, yield point, and thixotropic area. Viscosity is measured at shear rates of 800 seconds$^{-1}$, 100 seconds$^{-1}$, and 10 seconds$^{-1}$.

II. Liquid/Solid Stability Measurement

The sample is heated until it completely melts and is thoroughly mixed. The sample is then poured into centrifuge tubes at 100°F ± 5°F (37.8°C ± 3°C). The samples then are allowed to recrystallize for 24 hours at 100°F + 5°F (37.8°C ± 3°C). The samples are then centrifuged at 60,000 rpm for one hour at 37°C. The percent liquid separated is then measured by comparing the relative heights of the liquid and solid phases.

III. Solid Fat Content Measurement

Before determining SFC values, the fat material sample is heated to a temperature of 158°F (70°C) or higher for at least 0.5 hours or until the sample is completely melted. The melted sample is then tempered at a temperature of 40°F (4.4°C) for at least 72 hours. After tempering, the SFC value of the fat material at a temperature of 100°F (37.8°C) is determined by pulsed nuclear magnetic resonance (PNMR). The method for determining SFC values of a fat by PNMR is described in Madison and Hill, J. Amer. Oil. Chem. Soc., Vol. 55 (1978), pp. 328-31. The following Example is intended to be further illustrative.

Example 1

Methyl esters of a fully hydrogenated soy oil and a touch-hardened soy oil, blended in a 55/45 ratio (16 kg), and 2 kg. of an 15 wt. percent solution of potassium hydroxide in methanol are mixed in a stainless steel batch reactor. This mixture is then heated to 86°F (30°C) with agitation for 1 to 2 hours at atmospheric pressure. During this time, a portion of the methyl esters are saponified. A vacuum is then pulled on the system to remove the last traces of methanol.

Powdered sucrose (3 kg.) is added to the soap/ester mixture to give a 5:1 molar ratio of ester to sucrose. Potassium carbonate is then added to the mixture (approx. 0.5 wt. percent of the reaction mix) to catalyze the transesterification. This mixture is agitated and heated under vacuum at about 275°F (135°C) for up to 2-1/2 hours to form the mono-, di- and trisucrose esters, Small quantities of tetra- and pentaesters are also formed during this stage. Additional methyl ester (19.5 kg) which has been preheated to 275°F (135°C) is added to bring and maintain the molar ratio of the esters to sucrose to 12:1. When the reaction conditions stabilize at 275°F (135°C), a nitrogen sparge is used to improve agitation and promote methanol stripping. As the reaction occurs, the reaction mixture becomes viscous and then thins out. This second reaction stage lasts approximately 4 to 8 hours.

After the reaction mixture has become thin, it is cooled to between 149°F (65°C) and 185°F (85°C). The crude reaction mixture is agitated with a dilute solution of methanol, sodium chloride and water. The volume of this wash solution is equal to 20% to 40% of the reaction mixture volume. The mixed phases are then allowed to settle for approximately 30 to 60 minutes. The lower settled phase which contains the soaps, excess sugars and methanol is drawn off and discarded. The upper settled phase which comprises the refined sucrose polyesters is washed again. Usually 2 to 4 washes are used.

The sucrose polyesters are then washed with a 1% glacial acetic acid in water solution at 10% to 20% of the volume of the reaction mix. This is followed by water wash of the same volume.

The reaction mix is then dried to remove moisture at 176°F (80°C) under 10 mm Hg or less vacuum for 30 to 60 minutes. Filtrol 105 (0.5 wt. percent), and a filter aid (0.5 wt. percent) are added and the mix is agitated at 167°F (75°C) to 185°F (85°C). The slurry is separated by filtration or other means until there is less than 0.1 wt. percent fines. The liquid is then passed through a 1 micromillimeter filter.

The refined and bleached reaction mix is put into a stainless steel batch reactor to distill off the bulk of the methyl eaters. The distillation takes place at 374°F (190°C) to 482°F (250°C) under approximately 5 mm Hg of vacuum. This step is complete when it is visually evident that the distillation has slowed down.

The sucrose polyester is then deodorized in a stainless steel batch deodorizer or other suitable device at 374°F (190°C) to 482°F (250°C) under a vacuum of about 5 mm Hg with steam sparging. Deodorization is continued until the methyl ester content is below 200 ppm. The deodorizer contents are then cooled while using inert gas sparging. After cooling to 149°F (65°C), the deodorizer is brought to atmospheric pressure. The sucrose polyester is stored in clean stainless steel drums.

This produces a sucrose polyester product having the fatty acid composition specified in Table I. Rheology and effectiveness at preventing laxative side effect are listed in Table II.

The results shown In Tables I and II illustrate that sucrose polyesters prepared according to Example 1 have the properties of the low calorie fat materials of the present invention. The second column in Table I shows the properties of a liquid sucrose polyester prepared according to a method known to the art, and not falling within the present invention.

Table II compares the rheology and effectiveness at preventing laxative side effect of the two samples. Example 1 have rheological properties according to this invention; the liquid sucrose polyester does not. The liquid sucrose polyester results in a 15% oil loss when ingested. By contrast, the sucrose polyesters prepared in Example 1 result in 0% oil loss, showing that they are very effective at eliminating laxative side effect.

When the sucrose polyesters of Example 1 are mixed with triglyceride in a ratio of 75% sucrose polyester and 25% triglyceride, a composition is made that tastes very good when ingested and that does not cause a laxative side effect.

## Table I

### Sucrose Polyester Composition

| | Example 1 | Liquid Sucrose Polyester |
|---|---|---|
| **Fatty Acid Composition** | % | % |
| Others | 2.3 | 3.4 |
| $C_{16}$ | 9.4 | 8.6 |
| $C_{18}$ | 50.8 | 5.7 |
| $C_{18:1}$ | 20.4 | 45.6 |
| $C_{18:2}$ | 14.8 | 31.7 |
| $C_{18:3}$ | 0.3 | 0.4 |
| $C_{20}$ | 0.6 | 0.6 |
| $C_{22}$ | 1.4 | 0.0 |
| **I.V.** | 47.6 | 110 . |
| **Ester Distribution** | % | % |
| Octa | 79.0 | 71.1 |
| Hepta | 19.2 | 24.0 |
| Hexa | 1.8 | 4.9 |
| Penta | 0.1 | 0.1 |
| < Penta | 0.1 | 0.1 |
| **SFC Profile** | % | % |
| 50 °F. | 64.3 | 0 |
| 70 °F. | 53.6 | 0 |
| 80 °F. | 43.0 | 0 |
| 92 °F. | 21.1 | 0 |
| 105 °F. | 2.7 | 0 |
| 98.6 °F. | 11.9 | 0 |
| **DSC Behavior** | °C. | °C. |
| Complete Melt Point | 42.5 | -20.0 |
| Maximum Melt Point | 39.4 | -35.0 |
| Heat of Fusion | 11.7 | 10.6 |
| | cal./g. | cal./g/ |

## TABLE II

### Comparison of Physical Properties of the Sucrose Polyesters with Effectiveness Against Laxative Side Effect

| | LSE Effectiveness | Rheology | | | | | Liq/Solid |
| | Oil Loss (%) | Viscosity (poise)/Pa.s | | | Yield Point (dynes/cm$^2$ Pa) | Thixotropic Area (dynes/cm$^2$-sec.)/Pa.sec$^{-1}$ | Stability (100%-% Sep.) |
| | | $\frac{800}{(\text{sec.}^{-1})}$ | $\frac{100}{(\text{sec.}^{-1})}$ | $\frac{10}{(\text{sec.}^{-1})}$ | | | |
| **EFFECTIVE:** | | | | | | | |
| Example 2 | 0 | 10.3/1.03 | 48.6/4.86 | 462/46.2 | 17,496/1749.6 | $1.658 \times 10^6/1.658.10^5$ | 100 |
| **INEFFECTIVE:** | | | | | | | |
| Liquid Sucrose Polyester | 15 | 2.1/0.21 | 2.1/0.25 | 2/0.2 | None | None | -NA- |

EP 0 233 856 B1

## Claims

1. A composition of matter having a Solid Fat Content less than 20% at mouth temperature (33.3 °C 92 °F), comprising :

EP 0 233 856 B1

(a)an edible, wholly or partially nondigestible low calorie fat material selected from sugar fatty acid polyesters, sugar alcohol fatty acid polyesters and mixtures thereof wherein the sugars and sugar alcohols contain from 4 to 8 hydroxyl groups, wherein the sugar fatty acid polyesters and sugar alcohol fatty acid polyesters have at least 4 fatty acid ester groups, and wherein the fatty acids are mixtures of fatty acids containing from 8 to 22 carbon stoms, wherein the sugar fatty acid polyesters that are sucrose fatty acid polyesters have an octa ester content of at least 70%, said low calorie fat material having, at $37.8\,^\circ$C ($100\,^\circ$F):

   (i) a viscosity of at least 0.25 Pa.s. (2,5 poise) at a shear rate of 800 seconds$^{-1}$, a viscosity of least 0.4 Pa.s. (4 poise) at a shear rate of 100 seconds$^{-1}$, and a viscosity of at least 2.5 Pa.s. (25 poise) at a shear rate of 10 seconds$^{-1}$;

   (ii) a yield point of at least 250 Pa (2500 dynes/cm$^2$)

   (iii)a thizotropic area of at least $0.2\times10^5$ Pa.sec$^{-1}$ ($0,2.10^6$ dynes/cm$^2$-sec) and

   (iv)a liquid/solid stability of at least 50%, defined as the weight percent of a sample not separating as a liquid after centrifuging at 60,000 RPM for 1 hour at $37.8\,^\circ$C ($100\,^\circ$F) and

   (b)an edible, absorbable, digestible food material which acts as a solvent for said fat material.

2. A composition according to Claim 1 wherein the digestible food material is a member selected from triglycerides, monoglycerides, diglycerides, substituted mono- and diglycerides, polyglycerol esters, citrus oils, flavorants, edible alcohols, edible food emulsifiers, and mixtures thereof.

3. A composition according to Claim 2 wherein the low calorie fat material is a sucrose fatty acid polyester and the digestible food material is a triglyceride, and wherein the composition comprises from 33% to 90% sucrose fatty acid polyester and from 10% to 66% triglyceride.

4. A composition according to Claim 3 wherein the composition comprises from 67% to 90% sucrose fatty acid polyester and from 10% to 33% triglyceride.

5. A composition of matter comprising :

   (a) an edible, wholly or partially nondigestible low calorie fat material selected from sugar fatty acid polyesters, sugar alcohol fatty acid polyesters and mixtures thereof wherein the sugars and sugar alcohols contain from 4 to 8 hydroxyl groups, wherein the sugar fatty acid polyesters and sugar alcohol fatty acid polyesters have at least 4 fatty acid ester groups, wherein the fatty acids are mixtures of fatty acids containing from 8 to 22 carbon atoms, wherein the sugar fatty acid polyesters that are sucrose fatty acid polyesters have an octa ester content of at least 70% by weight, said low calorie fat material having, at $37.8\,^\circ$C ($100\,^\circ$F):

   (i)a viscosity of at least 0.25 Pa.s. (2,5 poise) at a shear rate of 800 seconds$^{-1}$ , a viscosity of at least 0.40 Pa.s. (4 poise) at 100 seconds$^{-1}$, and a viscosity of at least 2.5 Pa.s. (25 poise) at 10 seconds$^{-1}$;

   (ii)a yield point of at least 250 Pa (2500 dynes/cm$^2$)

   (iii)a thixotropic area of at least $0.20 \times 10^5$ Pa sec$^{-1}$; ($0,2.10^6$ dynes/cm$^2$-sec)

   (iv) a liquid/solid stability of at least 50% defined as the weight percent of a sample not separating as a liquid after centrifuging at 60,000 RPM for 1 hour at $37.8\,^\circ$C ($100\,^\circ$F); and

   (b) a food emulsifier capable of forming an oil-in-water emulsion with the low calorie fat material in the mouth wherein the emulsifier has an HLB value of at least 2.

6. A composition according to Claim 4 wherein the food emulsifier is selected from mono- and diglycerides, lower sucrose esters, lower polyglycerol esters, and mixtures thereof.

7. A low calorie fat composition according to any one of Claims 1-5 wherein at least 80%, preferable at least 90% by weight of the mixture of fatty acids comprises a mixture of palmitic, stearic, oleic, linoleic and behenic acids.

8. A low calorie fat composition according to Claim 6 wherein the mixture of fatty acids comprises from 9% to 12% palmitic acid, from 35% to 53% stearic acid, from 19% to 43% oleic acid, from 2% to 17% linoleic acid, from 0% to 2% linolenic acid, from 0% to 2% arachidic acid, from 0% to 10% behenic acid and from 0% to 2% erucic acid.

12

**Patentansprüche**

1.  Zusammensetzung mit einem Festfettgehalt von weniger als 20 % bei Mundtemperatur (33,3 °C; 92 °F), umfassend:

    (a) eineßbares, ganz oder teilweise unverdauliches kalorienarmes Fettmaterial, ausgewählt aus Zuckerfettsäurepolyestern, Zuckeralkoholfettsäurepolyestern und Mischungen hiervon, wobei die Zucker und Zuckeralkohole 4 bis 8 Hydroxylgruppen enthalten, die Zuckerfettsäurepolyester und Zuckeralkoholfettsäurepolyester mindestens 4 Fettsäureestergruppen besitzen und wobei die Fettsäuren Mischungen aus Fettsäuren mit 8 bis 22 Kohlenstoffatomen sind, die Zuckerfettsäurepolyester, welche Saccharosefettsäurepolyester sind, einen Octaestergehalt von mindestens 70 % besitzen und wobei das kalorienarme Fettmaterial bei 37,8 °C (100 °F):

    (i) eine Viskosität von mindestens 0,25 Pa•s (2,5 Poise) bei einer Scherrate von 800 sec$^{-1}$, eine Viskosität von mindestens 0,4 Pa•s (4 Poise) bei einer Scherrate von 100 sec$^{-1}$ und eine Viskosität von mindestens 2,5 Pa•s (25 Poise) bei einer Scherrate von 10 sec$^{-1}$;

    (ii) eine Fließgrenze von mindestens 250 Pa (2500 dyn/cm$^2$)

    (iii) einen Thixotropiebereich von mindestens 0,2 x 10$^5$ Pa•s$^{-1}$ (0.2 x 10$^6$ dyn/cm$^2$•sec) und

    (iv) eine Flüssig/Fest-Stabilität von mindestens 50 % aufweist, die als Gew-% einer Probe, welche sich nach dem Zentrifugieren bei 60000 U min$^{-1}$ während einer Stunde bei 37,8 °C (100 °F) nicht als Flüssigkeit abscheidet, definiert ist, und

    (b) ein eßbares, absorbierbares, verdauliches Lebensmittelmaterial, welches als Lösungsmittel für das Fettmaterial dient.

2.  Zusammensetzung nach Anspruch 1, wobei das verdauliche Lebensmittelmaterial ein aus Triglyceriden, Monoglyceriden, Diglyceriden, substituierten Mono- und Diglyceriden, Polyglycerinestern, Zitrusölen, Geschmacksstoffen, eßbaren Alkoholen, eßbaren Lebensmittelemulgatoren und Mischungen hiervon ausgewähltes Material ist.

3.  Zusammensetzung nach Anspruch 2, wobei das kalorienarme Fettmaterial ein Saccharosefettsäurepolyester und das verdauliche Lebensmittelmaterial ein Triglycerid ist, und wobei die Zusammensetzung 33 % bis 90 % Saccharosefettsäurepolyester und 10 % bis 66 % Triglycerid umfaßt.

4.  Zusammensetzung nach Anspruch 3, wobei die Zusammensetzung 67 % bis 90 % Saccharosefettsäurepolyester und 10 % bis 33 % Triglycerid umfaßt.

5.  Zusammensetzung, umfassend:

    (a) ein eßbares, ganz oder teilweise unverdauliches, kalorienarmes Fettmaterial ausgewählt aus Zuckerfettsäurepolyestern, Zuckeralkoholfettsäurepolyestern und Mischungen hiervon, wobei die Zucker und Zuckeralkohole 4 bis 8 Hydroxylgruppen enthalten, die Zuckerfettsäurepolyester und Zuckeralkoholfettsäurepolyester mindestens 4 Fettsäureestergruppen aufweisen, wobei die Fettsäuren Mischungen aus Fettsäuren mit 8 bis 22 Kohlenstoffatomen sind, die Zuckerfettsäurepolyester, welche Saccharosefettsäurepolyester sind, einen Octaestergehalt von mindestens 70 Gew.-% besitzen und wobei das kalorienarme Fettmaterial bei 37,8 °C (100 °F)

    (i) eine Viskosität von mindestens 0.25 Pa•s (2,5 Poise) bei einer Scherrate von 800 sec$^{-1}$, eine Viskosität von mindestens 0,40 Pa•s (4 Poise) bei 100 sec$^{-1}$ und eine Viskosität von mindestenes 2,5 Pa•s (25 Poise) bei 10 sec$^{-1}$;

    (ii) eine Fließgrenze von mindestens 250 Pa•s (2500 dyn/cm$^2$);

    (iii) ein Thixotropiebereich von mindestens 0,20 x 10$^5$ Pa•s$^{-1}$ (0,2 x 10$^6$ dyn/cm$^2$•sec);

    (iv) eine Fest/Flüssig-Stabilität von mindestens 50% aufweist, welche definiert ist als Gew-% einer Probe, welche sich nach Zentrifugieren bei 60000 U min$^{-1}$ während einer Stunde bei 37,8 °C (100 °F) nicht als Flüssigkeit abscheidet; und

    (b) einen Lebensmittelemulgator, welcher in der Lage ist, mit dem kalorienarmen Fettmaterial im Mund eine Öl-In-Wasser-Emulsion zu bilden, wobei der Emulgator einen HLB-Wert von mindestens 2 besitzt.

6.  Zusammensetzung nach Anspruch 4, wobei der Lebensmittelemulgator aus Mono- und Diglyceriden, niederen Saccharoseestern, niederen Polyglycerinestern und Mischungen hiervon gewählt ist.

**7.** Kalorienarme Fettzusammensetzung nach mindestens einem der Ansprüche 1 bis 5, wobei mindestens 80 %, vorzugsweise mindestens 90 Gew.-% der Mischung der Fettsäuren eine Mischung aus Palmitin-, Stearin-, Olein-, Linol- und Behensäure umfaßt.

**8.** Kalorienarme Fettzusammensetzung nach Anspruch 6, wobei die Mischung der Fettsäuren 9 % bis 12 % Palmitinsäure, 35 % bis 53 % Stearinsäure, 19 % bis 43% Oleinsäure, 2 % bis 17% Linolsäure, 0 % bis 2 % Linolensäure, 0 % bis 2 % Arachinsäure, 0 % bis 10 % Behensäure und 0 % bis 2 % Erucasäure umfaßt.

## Revendications

**1.** Composition de matière possédant une teneur en graisses solides inférieure à 20% à la température de la bouche (33,3°C, 92°F), comprenant :

(a) une matière grasse basses calories comestible, totalement ou partiellement non digestible, choisie parmi les polyesters d'acides gras de sucres, les polyesters d'acides gras d'alcools de sucre et les mélanges de ceux-ci, dans laquelle les sucres et les alcools de sucre contiennent de 4 à 8 groupes hydroxyle, dans laquelle les polyesters d'acides gras de sucres et les polyesters d'acides gras d'alcools de sucre comportent au moins 4 groupes ester d'acide gras, et dans laquelle les acides gras sont des mélanges d'acides gras contenant de 8 à 22 atomes de carbone, les polyesters d'acides gras de sucres qui sont des polyesters d'acides gras de saccharose possédant une teneur en octa-ester d'au moins 70%, ladite matière grasse basses calories présentant, à 37,8°C (100°F) :

(i) une viscosité d'au moins 0,25 Pa.s (2,5 poises) à une vitesse de cisaillement de 800 s$^{-1}$, une viscosité d'au moins 0,4 Pa.s (4 poises) à une vitesse de cisaillement de 100 s$^{-1}$ et une viscosité d'au moins 2,5 Pa.s (25 poises) à une vitesse de cisaillement de 10 s$^{-1}$;

(ii) une limite d'écoulement d'au moins 250 Pa (2500 dynes/cm$^2$);

(iii) une surface thixotrope d'au moins 0,2 x 10$^5$ Pa.s$^{-1}$ (0,2 x 10$^6$ dynes/cm$^2$.s); et

(iv) une stabilité liquide/solide d'au moins 50%, définie en pourcentage pondéral d'un échantillon ne se séparant pas sous forme de liquide après centrifugation à 60 000 tours/min pendant 1 heure à 37,8°C (100°F); et

(b) une denrée alimentaire comestible, absorbable, digestible, qui joue le rôle de solvant pour ladite matière grasse.

**2.** Composition selon la revendication 1, dans laquelle la denrée alimentaire digestible est un composé choisi parmi les triglycérides, les monoglycérides, les diglycérides, les mono- et diglycérides substitués, les poly(esters de glycérol), les huiles d'agrumes, les arômes, les alcools comestibles, les émulsifiants alimentaires comestibles, et les mélanges de ceux-ci.

**3.** Composition selon la revendication 2, dans laquelle la matière grasse basses calories est un polyester d'acide gras de saccharose et la denrée alimentaire digestible est un triglycéride, et dans laquelle la composition comprend de 33% à 90% de polyester d'acide gras de saccharose et de 10% à 66% de triglycéride.

**4.** Composition selon la revendication 3, dans laquelle la composition comprend de 67% à 90% de polyester d'acide gras de saccharose et de 10% à 33% de triglycéride.

**5.** Composition de matière comprenant :

(a) une matière grasse basses calories comestible, totalement ou partiellement non digestible, choisie parmi les polyesters d'acides gras de sucres, les polyesters d'acides gras d'alcools de sucre et les mélanges de ceux-ci, dans laquelle les sucres et les alcools de sucre contiennent de 4 à 8 groupes hydroxyle, dans laquelle les polyesters d'acides gras de sucres et les polyesters d'acides gras d'alcools de sucre comportent au moins 4 groupes ester d'acide gras, et dans laquelle les acides gras sont des mélanges d'acides gras contenant de 8 à 22 atomes de carbone, les polyesters d'acides gras de sucres qui sont des polyesters d'acides gras de saccharose possédant une teneur en octa-ester d'au moins 70% en poids, ladite matière grasse basses calories présentant, à 37,8°C (100°F) :

(i) une viscosité d'au moins 0,25 Pa.s (2,5 poises) à une vitesse de cisaillement de 800 s$^{-1}$, une viscosité d'au moins 0,40 Pa.s (4 poises) à 100 s$^{-1}$ et une viscosité d'au moins 2,5 Pa.s (25

14

poises) à 10 s$^{-1}$;

(ii) une limite d'écoulement d'au moins 250 Pa (2500 dynes/cm$^2$);

(iii) une surface thixotrope d'au moins 0,20 x 10$^5$ Pa.s$^{-1}$ (0,2 x 10$^6$ dynes/cm$^2$.s); et

(iv) une stabilité liquide/solide d'au moins 50%, définie en pourcentage pondéral d'un échantillon ne se séparant pas sous forme de liquide après centrifugation à 60 000 tours/min pendant 1 heure à 37,8°C (100°F); et

(b) un émulsifiant alimentaire capable de former une émulsion huile dans l'eau avec la matière grasse basses calories dans la bouche, l'émulsifiant ayant un rapport hydrolipophile (HLB) d'au moins 2.

6. Composition selon la revendication 4, dans laquelle l'émulsifiant alimentaire est choisi parmi les mono- et les diglycérides, les esters de saccharose inférieurs, les poly(esters de glycérol) inférieurs, et les mélanges de ceux-ci.

7. Composition de matière grasse basses calories selon l'une quelconque des revendications 1-5, dans laquelle au moins 80%, de préférence au moins 90%, du poids du mélange d'acides gras, comprend un mélange d'acides palmitique, stéarique, oléique, linoléique et béhénique.

8. Composition de matière grasse basses calories selon la revendication 6, dans laquelle le mélange d'acides gras comprend de 9% à 12% d'acide palmitique, de 35% à 53% d'acide stéarique, de 19% à 43% d'acide oléique, de 2% à 17% d'acide linoléique, de 0% à 2% d'acide linolénique, de 0% à 2% d'acide arachidique, de 0% à 10% d'acide béhénique et de 0% à 2% d'acide érucique.